# EUROPÄISCHE PATENTSCHRIFT

(11) **EP 0 766 099 B1**
(45) Veröffentlichungstag und Bekanntmachung des Hinweises auf die Patenterteilung: **30.05.2001**
(21) Anmeldenummer: 96114288.2
(22) Anmeldetag: 05.09.1996
(51) Int. Cl.: G01S 7/03, G01S 13/58, H01Q 21/00, H01Q 23/00

(54) **Dopplerradarmodul**
Doppler radar module
Module radar à Doppler

(30) Priorität: 27.09.1995 DE 19535962
(43) Veröffentlichungstag der Anmeldung: 02.04.1997
(73) Patentinhaber: Infineon Technologies AG, 81669 München (DE)
(72) Erfinder: Lohninger, Gerhard, Dipl.Ing., 81549 München (DE)
(74) Vertreter: Zedlitz, Peter, Dipl.-Inf.

(56) Entgegenhaltungen:
- EP-A- 0 638 818
- US-A- 4 967 201
- US-A- 5 262 783
- OPPERMANN M ET AL: "SINGLE - AND DOUBLEFACE STRUCTURED MCMS IN THIN FILM TECHNOLOGY FOR MODERN RADAR APPLICATIONS" INTERNATIONAL JOURNAL OF MICROCIRCUITS AND ELECTRONIC PACKAGING, Bd. 17, Nr. 4, 1. Oktober 1994, Seiten 401-406, XP000497402

## Beschreibung

Die Erfindnung bezieht sich auf ein Dopplerradarmodul, das in Mikrostreifenleitungstechnik aufgebaut ist und eine Antenne, eine Schaltung zum Senden und Empfangen von Mikrowellen und ein aus einem elektrisch leitenden Material gefertigtes Gehäuse aufweist.

Ein solches Dopplerradarmodul ist beispielsweise aus der europäischen Patentanmeldung EP 638 818 bekannt. Bei diesem bekannten Dopplerradarmodul ist eine Schaltung zum Senden und Empfangen von Mikrowellen in Mikrostreifenleitungstechnik beidseitig auf einer Multilayerplatine aufgebracht, die in einem aus einem elektrisch leitenden Material bestehenden Gehäuse befestigt ist. Auf den Außenflächen des Gehäuses ist eine Flächenantenne und eine NF-Platine mit Spannungsregler und Dopplersignalverstärker befestigt. Dieses besonders kleine und sehr einfach aufgebaute Dopplerradarmodul ist für einen Betrieb bei ca. 10 Ghz ausgelegt. Bei dieser Frequenz weist es eine geringe Oberwellenabstrahlung und eine hohe Empfindlichkeit bei geringer Sendleistung auf.

Das oben beschriebene Dopplerradarmodul nach dem Stand der Technik eignet sich jedoch nicht für den Betrieb bei der weltweit fernmeldetechnisch zugelassenen Betriebsfrequenz von ungefähr 2.45 Ghz, da es bei dieser Frequenz eine unzulässig hohe Oberwellenabstrahlung, eine zu geringe Emfpindlichkeit und zu große Abmessungen besitzt.

Die Aufgabe der vorliegenden Erfindung besteht darin, ein Dopplerradarmodul zu entwickeln, das im unteren GHz-Bereich , insbesondere bei 2.45 Ghz, eine geringe Oberwellenabstrahlung und eine hohe Empfindlichkeit aufweist. Gleichzeitig soll dieses Dopplerradarmodul möglichst klein und einfach herstellbar sein.

Diese Aufgabe wird erfindungsgemäß dadurch gelöst, daß die Schaltung zum Senden und Empfangen von Mikrowellen zumindest teilweise auf einem ersten elektrisch isolierenden Substrat aufgebracht ist, daß eine Oberwellenfilteranordnung als Triplate-Struktur aufgebaut ist, bei der eine Mehrzahl von Filterstrukturen zumindest teilweise auf einem zweiten elektrisch isolierenden Substrat angeordnet ist, daß die Antenne eine Flächenantenne ist, bei der ein Flächendipol auf einem vierten elektrisch isolierenden Substrat aufgebracht ist, daß das erste elektrisch isolierende Substrat mit der Schaltung zum Senden und Empfangen von Mikrowellen und das zweite elektrisch isolierende Substrat mit der Oberwellenfilteranordnung zu einer Multilayerplatine zusammengefügt sind, daß die Antenne auf der Multilayerplatine befestigt ist und daß die Schaltung, die Oberwellenfilteranordnung und der Flächendipol mittels elektrisch leitender Substratdurchführungen entsprechend einem vorgegebenen Schaltplan miteinander verschaltet sind.

Eine vorteilhafte Ausführungsform des erfindungsgemäßen Dopplerradarmoduls besteht darin, daß die Schaltung zum Senden und Empfangen von Mikrowellen auf einem ersten elektrisch isolierenden Substrat aufgebracht ist, daß die Oberwellenfilteranordnung als Triplate-Struktur aufgebaut ist, bei der eine Mehrzahl von Filterstrukturen zwischen einem zweiten und einem dritten elektrisch isolierenden Substrat angeordnet ist, die jeweils auf einer der Mehrzahl von Filterstrukturen gegenüberliegenden Seite eine erste bzw. eine zweite Massemetallisierung aufweisen, daß das erste elektrisch isolierende Substrat mit der Schaltung zum Senden und Empfangen von Mikrowellen und die Oberwellenfilteranordnung zu einer Multilayerplatine zusammengefügt sind, derart, daß die erste Massemetallisierung auf der Seite des ersten elektrisch isolierenden Substrats aufliegt, die der Schaltung zum Senden und Empfangen von Mikrowellen gegenüberliegt, daß die Antenne eine Flächenantenne ist, bei der ein Flächendipol auf einem vierten elektrisch isolierenden Substrat aufgebracht ist, daß die Antenne derart auf der Multilayerplatine befestigt ist, daß die dem Flächendipol gegenüberliegende Seite des vierten elektrisch isolierenden Substrates der zweiten Massemetallisierung gegenüberliegt, daß die Schaltung, die Oberwellenfilteranordnung, der Flächendipol und die erste und die zweite Massemetallisierung mittels elektrisch leitender Substratdurchführungen entsprechend einem vorgegebenen Schaltplan miteinander verschaltet sind.

Vorteilhafte Ausgestaltungen bzw. Weiterbildungen der Erfindung sind Gegenstand von abhängigen Ansprüchen.

Die Erfindung wird anhand von zwei Ausführungsbeispielen in Verbindung mit den Figuren la bis 6 näher erläutert. Es zeigen:
die Figur la und 1b je eine perspektivische Ansicht einer in einzelne Substratebenen aufgetrennten Multilayerplatine mit Antenne gemäß dem ersten Ausführungsbeispiel von oben bzw. von unten,
Figur 2 eine Draufsicht auf das Substrat mit den Filterstrukturen der Oberwellenfilteranordnung,
Figur 3a eine Draufsicht auf die Flächenantenne,
Figur 3b einen Schnitt durch die Flächenantenne entlang der in Figur 3a eingezeichneten Linie A - A,
Figuren 4a und 4b je einen senkrechten Schnitt durch einen Teilbereich der Multilayerplatine mit Antenne gemäß dem ersten Ausführungsbeispiel,
Figur 5a eine Draufsicht auf ein Dopplerradarmodul gemäß einem der beiden Ausführungsbeispiele,
Figur 5b eine schematische Darstellung eines Schnittes durch das Dopplerradarmodul entlang der in Figur 5a eingezeichneten Linie B - B,
Figur 6 eine schematische Darstellung eines Schnittes durch einen Teilbereich der Multilayerplatine mit Antenne gemäß dem zweiten Ausführungsbeispiel.

Die in den Figuren la und 1b dargestellte, in einzelne Substratebenen aufgetrennte Multilayerplatine 13 setzt sich aus drei beispielsweise achteckigen elektrisch isolierenden Substraten 4, 9, 10 zusammen, die übereinander angeordnet sind. Die Substrate 4, 9, 10 bestehen beispielsweise aus Epoxidharz, Teflon-Material oder aus Al₂O₃ und haben z. B. eine Dicke von etwa 0,5 mm. Auf der Unterseite des Substrats 4 ist eine Schaltung zum Senden und Empfangen von Mikrowellen aufgebracht. Das zwischen dem Substrat 4 und dem Substrat 10 angeordnete Substrat 9 ist auf seiner Unterseite mit einer Massemetallisierung 11 versehen. Auf seiner Oberseite ist eine HF-Filterstruktur 5 mit einem HF-Einkoppelpunkt 21 und einem Antennenanschlußpunkt 22, drei NF-Filterstrukturen 6, 7, 8, die einerseits mit je einem DC-Einkoppelpunkt 26, 27, 28, und andererseits mit je einem Schaltungsanschlußpunkt 23, 24, 25 verbunden sind, sowie Massestege 29 aufgebracht. Die Oberseite des Substrats 10 ist wiederum mit einer Massemetallisierung 12 versehen.

Die HF- und NF-Filterstrukturen 5 - 8 auf der Oberseite des Substrats 9 bilden zusammen mit den beiden Massemetallisierungen 11 und 12 eine Oberwellenfilteranordnung 2 in Triplatestruktur. Die HF-Filterstruktur 5 hat eine geringe Durchgangsdämpfung für die Grundwelle und eine hohe Dämpfung für die 1. und die 2. Oberwelle der von der Schaltung 3 erzeugten HF-Strahlung. Sie ist beispielhaft als LC-Tiefpaß-Filter 5. Ordnung in Mikrostreifenleitungstechnik ausgeführt. Die NF-Filterstrukturen 6, 7, 8 unterdrücken ebenfalls die Oberwellen. Diese haben ebenfalls Tiefpaß-Charakter und weisen zweifach LC-Sperrfilter in Mikrostreifenleitungstechnik auf.

Über dem Substrat 10 ist eine Antenne 1 angeordnet. Diese besteht aus einem weiteren achteckigen elektrisch isolierenden Substrat 15, auf dessen Oberseite ein Flächendipol 14 und auf dessen Unterseite eine Massemetallisierung 16 aufgebracht ist. Das Substrat 15 besteht beispielsweise wiederum aus Epoxidharz, Teflon-Material oder aus Al₂O₃.

Sämtliche Strukturen auf der Oberseite des Substrats 9 und auf der Unterseite des Substrats 4, die Massemetallisierungen 11, 12 und 16 sowie der Flächendipol 14 bestehen beispielsweise aus einer etwa 35 µm dicken Schicht aus Cu oder aus einem anderen elektrisch leitenden Material.

Die achteckige Geometrie der Multilayerplatine 13 und der Antenne 1 ergibt hinsichtlich Montagekonzept sehr geringe Gehäuseabmessungen. Andere Geometrien, wie beispielsweise viereckig oder oval, sind ohne Funktionsbeeinträchigung ebenso denkbar.

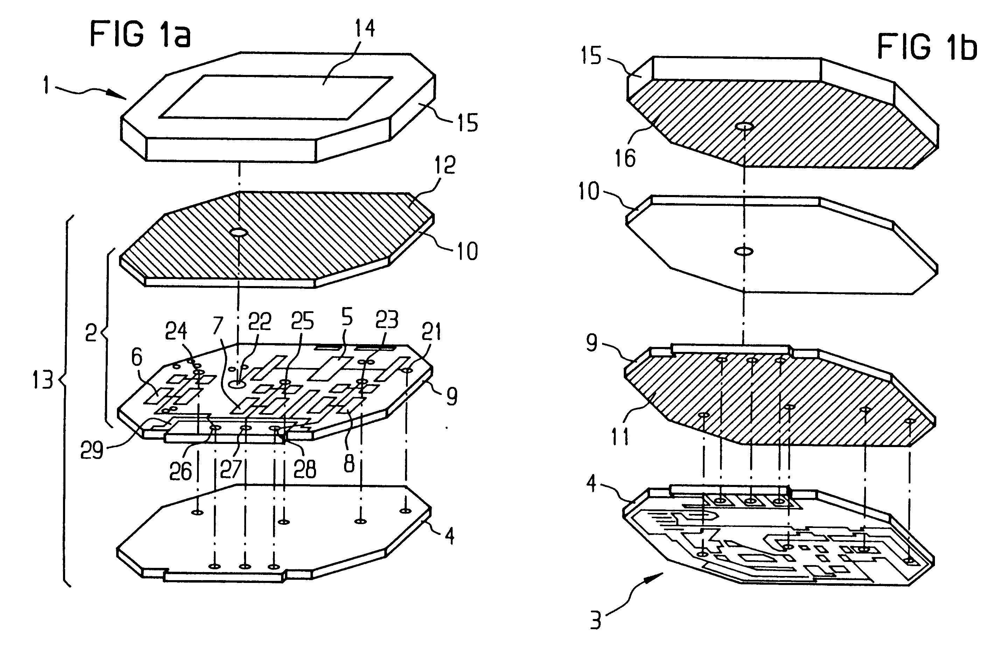

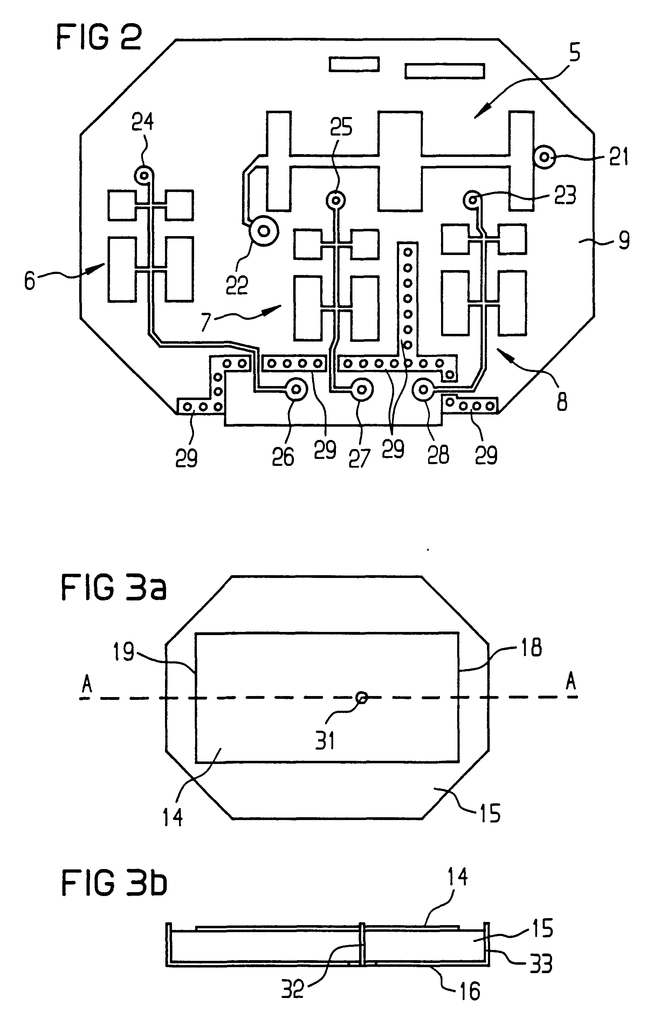

Die in der Figur 2 schematisch dargestellte Draufsicht auf das Substrat 9 zeigt eine bevorzugte Ausführungsform bzw. Anordnung der HF-Filterstruktur 5 mit HF-Einkoppelpunkt 21 und Antennenanschlußpunkt 22, der NF-Filterstrukturen 6, 7, 8 mit Schaltungsanschlußpunkten 23, 24, 25, der DC-Einkoppelpunkte 26, 27, 28 und der Massestege 29. Die DC-Einkoppelpunkte 26, 27, 28 sind auf dem Substrat randseitig in einer Reihe angeordnet. Die Massestege 29 verlaufen im wesentlichen zwischen den DC-Einkoppelpunkten 26, 27, 28 und den NF-Filterstukturen 6, 7, 8. Darüberhinaus ist zwischen den NF-Filterstukturen 7 und 8 ebenfalls ein Massesteg 29 auf das Substrat 9 aufgebracht. Die Massestege 29 dienen dazu, eine HF-Ausbreitung im Substrat zu vermindern und eine seitliche HF-Abstrahlung zu reduzieren. Eine Minderung der seitlichen HF-Abstrahlung kann auch durch eine zusätzliche Metallisierung der Seitenflächen, eine sogenannte Kantenmetallisierung der Substrate 9 und 10 erzielt werden. Die Kantenmetallisierung besteht z. B. wiederum aus einer etwa 35 µm dicken Cu-Schicht.

Bei der in Figur 3a gezeigten Draufsicht auf die Antenne 1 des Ausführungsbeispieles besteht das achteckige Substrat 15 aus Epoxidharz und der Flächendipol 14 aus einer Cu-Schicht, die einen HF-Einspeisepunkt 31 aufweist. Der HF-Einspeisepunkt 31 ist mittels einer elektrisch leitenden Substratdurchführung 32 (Figur 3b), die isoliert durch die Massemetallisierung 16 hindurchgeführt ist, mit der Multilayerplatine 13 verbunden. Die Länge der strahlenden Kanten 18, 19 des Flächendipols 14 ist kleiner als deren Abstand voneinander und die Differenz zwischen der Länge des Substrats 15 und dem Abstand zwischen den beiden strahlenden Kanten 18, 19 ist größer als 2 mm. Die Dicke des Substrats 15 ist größer als 3 mm. Mittels Variation des Abstandes zwischen dem Einspeispunkt 31 und der nächstliegenden strahlenden Kante 18 kann die Impedanz der Antenne 1 eingestellt werden.

Eine für die Betriebsfrequenz von etwa 2,45 GHz besonders bevorzugte Ausführungsform der Antenne 1 weist folgende Maße auf:
Länge der strahlenden Kanten 18, 19: 14 mm,
Abstand der strahlenden Kanten 18, 19 voneinander: 29,4 mm,
Breite des Substrats 15: 26 mm,
Länge des Substrats: 36 mm,
Dicke des Substrats: 3,3 mm,
Abstand zwischen Einspeisepunkt 31 und nächstliegender strahlenden Kante 18: 11 mm.

Bei einer bevorzugten Ausführungsform der Antenne 1 weist das Substrat 15, wie in Figur 3b gezeigt, eine Kantenmetallisierung 33 auf, die beispielsweise wiederum aus einer 35 µm dikken Cu-Schicht besteht. Diese Kantenmetallisierung 33 Substrats 15 verringert die seitliche Ausbreitung der HF-Strahlung, wodurch die Abstrahlcharakteristik der Antenne 1 verbessert ist.

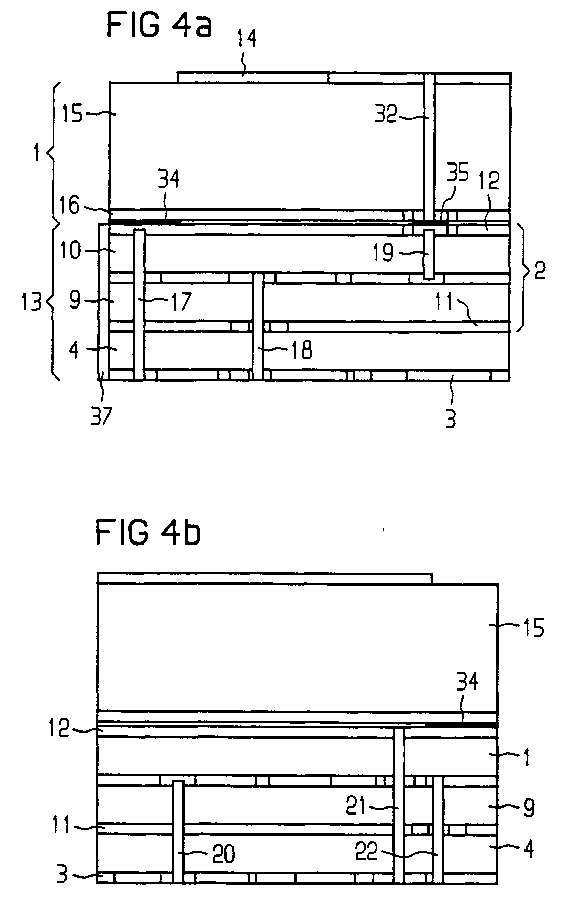

Die in den Figuren 4a und 4b gezeigten schematischen Darstellungen von Schnitten durch die Multilayerplatine 13 mit Antenne 1 veranschaulicht die Verbindungstechnik zwischen den einzelnen Komponenten des Dopplerradarmoduls untereinander mittels elektrisch leitender Substratdurchführungen 17, 18, 19, 20, 21, 22. Die Massemetallisierungen 11 und 12 und die Massestege 29 sind mittels der Substratdurchführungen 17 und 21, sogenannter Massedurchkontaktierungen, miteinander verbunden. Elektrisch leitende Verbindungsmittel 34 und 35, bestehend aus metallischem Lot oder elektrisch leitendem Klebstoff, verbinden die Massemetallisierung 16 mit der Multilayerplatine 13 bzw. die vom Flächendipol 14 kommende Substratdurchführung 32 mit der Substratdurchführung 19 der Multilayerplatine 13.

Eine besonders bevorzugte Ausführungsform der Multilayerplatine 13 weist an den Seitenflächen der Substrate 4, 9 und 10 eine Kantenmetallisierung 37 auf. Lediglich im Bereich von äußeren Anschlußflächen weist diese bevorzugte Multilayerplatine 13 keine Kantenmetallisierung auf.

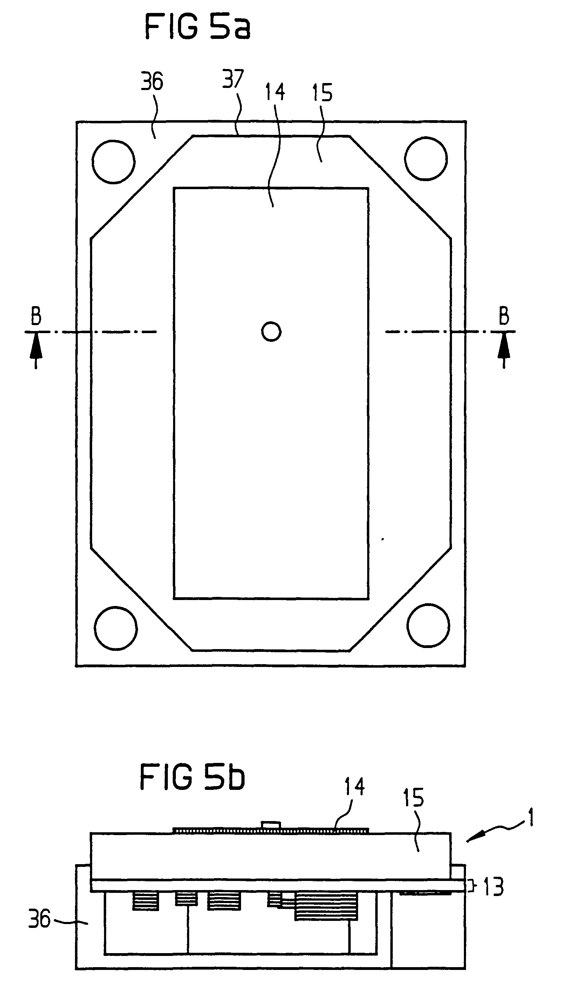

Das Gehäuse 36 (Figuren 5a und 5b) des Dopplerradarmoduls gemäß dem Ausführungsbeispiel besteht aus einem elektrisch leitenden Material und besitzt an seiner Oberseite eine achteckige Offnung 37, in der die Multilayerplatine 13 mit Antenne 1 befestigt ist. Das Gehäuse 36 ist derart geformt, daß die DC-Zuführung und die Dopplersignalauskoppelung über die Oberwellenfilteranordnung 2 erfolgen kann.

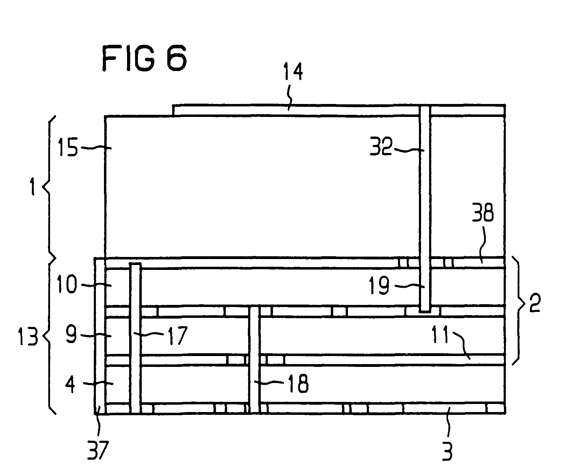

Das zweite Ausführungsbeispiel des erfindungsgemäßen Dopplerradarmoduls unterscheidet sich von dem ersten Ausführungsbeispiel lediglich dadurch, daß, wie in Figur 6 gezeigt, die zweite 12 und die dritte 16 Massemetallisierung durch eine einzige Massemetallisierung 38 ersetzt ist, die wahlweise auf dem Substrat 10 oder auf dem Substrat 15 aufgebracht ist. Je nach Ausführungsform ist dann das Substrat 10 oder das Substrat 15 auf der Massemetallisierung 38 beispielsweise mittels eines Lotes oder eines Klebstoffes befestigt

## Patentansprüche

1. Dopplerradarmodul, das in Mikrostreifenleitungstechnik aufgebaut ist und eine Antenne (1), eine Schaltung (3) zum Senden und Empfangen von Mikrowellen und ein aus einem elektrisch leitenden Material gefertigtes Gehäuse (36) aufweist,
dadurch gekennzeichnet,
daß die Schaltung (3) zum Senden und Empfangen von Mikrowellen zumindest teilweise auf einem ersten elektrisch isolierenden Substrat (4) aufgebracht ist,
daß eine Oberwellenfilteranordnung (2) als Triplate-Struktur aufgebaut ist, bei der eine Mehrzahl von Filterstrukturen zumindest teilweise auf einem zweiten elektrisch isolierenden Substrat (9) angeordnet ist, daß die Antenne (1) eine Flächenantenne ist, bei der ein Flächendipol (14) auf einem vierten elektrisch isolierenden Substrat (15) aufgebracht ist,
daß das erste elektrisch isolierende Substrat (4) und das zweite elekrisch isolierende Substrat (9) in einer Multilayerplatine (13) zusammengefügt sind,
daß die Antenne (1) auf der Multilayerplatine (13) befestigt ist und
daß die Schaltung (3), die Oberwellenfilteranordnung (2) und der Flächendipol (14) mittels elektrisch leitender Substratdurchführungen (17 - 22) entsprechend einem vorgegebenen Schaltplan miteinander verschaltet sind.

2. Dopplerradarmodul nach Anspruch 1,
dadurch gekennzeichnet,
daß die Schaltung (3) zum Senden und Empfangen von Mikrowellen auf dem ersten elektrisch isolierenden Substrat (4) aufgebracht ist,
daß die Oberwellenfilteranordnung (2) als Triplate-Struktur aufgebaut ist, bei der eine Mehrzahl von Filterstrukturen zwischen einem zweiten (9) und einem dritten (10) elektrisch isolierenden Substrat angeordnet ist, die jeweils auf einer der Mehrzahl von Filterstrukturen gegenüberliegenden Seite eine erste (11) bzw. eine zweite (12) Massemetallisierung aufweisen,
daß das erste elektrisch isolierende Substrat (4) mit der Schaltung (3) zum Senden und Empfangen von Mikrowellen und die Oberwellenfilteranordnung (2) in einer Multilayerplatine (13) zusammengefügt sind, derart, daß die erste Massemetallisierung (11) auf der Seite des ersten elektrisch isolierenden Substrats (4) aufliegt, die der Schaltung (3) zum Senden und Empfangen von Mikrowellen gegenüberliegt,
daß die Antenne (1) derart auf der Multilayerplatine (13) befestigt ist, daß die dem Flächendipol (14) gegenüberliegende Seite des vierten elektrisch isolierenden Substrates der zweiten Massemetallisierung (12) gegenüberliegt,
daß die Schaltung (3), die Oberwellenfilteranordnung (2) der Flächendipol (14) und die erste (11) und die zweite (12) Massemetallisierung mittels elektrisch leitender Substratdurchführungen (17 - 22) entsprechend einem vorgegebenen Schaltplan miteinander verschaltet sind.

3. Doppler-Radar-Modul nach Anspruch 1 oder 2, dadurch gekennzeichnet, daß es für den Frequenzbereich von 1 bis 5 GHz ausgelegt ist.

4. Doppler-Radar-Modul nach einem der Ansprüche 1 bis 3, dadurch gekennzeichnet, daß die Länge (29) der strahlenden Kanten (18, 19) des Flächendipols (14) kleiner als deren Abstand voneinander ist, daß die Differenz zwischen der Länge des vierten Substrats (15) und dem Abstand der beiden strahlenden Kanten (18, 19) des Flächendipols (14) größer als 2 mm ist und daß die Dicke des vierten Substrats (15) größer als 3 mm ist.

5. Doppler-Radar-Modul nach einem der Ansprüche 2 bis 4, dadurch gekennzeichnet, daß das vierte elektrisch isolierende Substrat (15) auf der dem Flächendipol (14) gegenüberliegenden Seite eine dritte Massemetallisierung (16) aufweist, die mit der zweiten Massemetallisierung (12) elektrisch leitend verbunden ist.

6. Doppler-Radar-Modul nach einem der Ansprüche 1 bis 5, dadurch gekennzeichnet, daß das vierte elektrisch isolierende Substrat (15) eine Kantenmetallisierung (20) aufweist.

7. Doppler-Radar-Modul nach einem der Ansprüche 1 bis 6, dadurch gekennzeichnet, daß das zweite Substrat (9) auf der Seite, auf der die Filterstrukturen aufgebracht sind, randseitig eine Mehrzahl von DC-Einkoppelpunkten (26, 27, 28) aufweist.

8. Doppler-Radar-Modul nach einem der Ansprüche 1 bis 7, dadurch gekennzeichnet, daß die Oberwellenfilteranordnung (2) aufweist:
einen HF-Triplatefilter (5), der zwischen der Schaltung (3) und der Antenne (1) angeschlossen ist und
drei NF-Triplatefilter (6, 7, 8) die jeweils einerseits an einen DC-Einkoppelpunkt (26, 27, 28) angeschlossen und anderseits mit der Schaltung (3) verbunden sind.

9. Doppler-Radar-Modul nach einem der Ansprüche 2 bis 8, dadurch gekennzeichnet, daß das zweite Substrat (9) und das dritte Substrat (10) je eine Kantenmetallisierung aufweisen.

10. Doppler-Radar-Modul nach einem der Ansprüche 1 bis 8, dadurch gekennzeichnet, daß die Multilayerplatine (13) eine Kantenmetallisierung (37) aufweist.

11. Doppler-Radar-Modul nach einem der Ansprüche 1 bis 10, dadurch gekennzeichnet, daß das erste Substrat (4) auf der Seite, auf der die Schaltung (3) aufgebracht ist, randseitig mindestens einen Massesteg aufweist, der eine seitliche Abstrahlung der Mikrowellenstrahlung verhindert.

12. Doppler-Radar-Modul nach einem der Ansprüche 1 bis 11, dadurch gekennzeichnet, daß das zweite Substrat (9) auf der Seite, auf der die Filterstrukturen aufgebracht sind, zwischen den NF-Filterstrukturen und den DC-Einkoppelpunkten eine Mehrzahl von Massestegen aufweist, die eine seitliche Abstrahlung der Mikrowellenstrahlung verhindert.

## Claims

1. Doppler radar module, which is designed using micro stripline technology and has an antenna (1), a circuit (3) for transmitting and receiving microwaves, and a housing (36) which is produced from an electrically conductive material,
characterized
in that the circuit (3) for transmitting and receiving microwaves is at least partially fitted on a first electrically insulating substrate (4),
in that a surface acoustic wave filter arrangement (2) is designed as a triplate structure, in which a number of filter structures are at least partially arranged on a second electrically insulating substrate (9), in that the antenna (1) is a flat antenna in which a flat dipole (14) is fitted on a fourth electrically insulating substrate (15),
in that the first electrically insulating substrate (4) and the second electrically insulating substrate (9) are joined together in a multilayer board (13),
in that the antenna (1) is mounted on a multilayer board (13), and
in that the circuit (3), the surface acoustic wave filter arrangement (2) and the flat dipole (14) are connected to one another in accordance with a predetermined circuit diagram by means of electrically conductive connections through the substrate (17 - 22).

2. Doppler radar module according to Claim 1,
characterized
in that the circuit (3) for transmitting and receiving microwaves is fitted on the first electrically insulating substrate (4),
in that the surface acoustic wave filter arrangement (2) is designed as a triplate structure, in which a number of filter structures are arranged between a second (9) and a third (10) electrically insulating substrate, which each have first (11) and second (12) earth metallization on a side opposite the number of filter structures,
in that the first electrically insulating substrate (4) is joined together with the circuit (3) for transmitting and receiving microwaves and the surface acoustic wave filter arrangement (2) in a multilayer board (13) in such a manner that the first earth metallization (11) lies on the side of the first electrically insulating substrate (4) which is opposite the circuit (3) for transmitting and receiving microwaves,
in that the antenna (1) is mounted on the multilayer board (13) in such a manner that that side of the fourth electrically insulating substrate which is opposite the flat dipole (14) is opposite the second earth metallization (12), and
in that the circuit (3), the surface acoustic wave filter arrangement (2), the flat dipole (14) and the first (11) and the second (12) earth metallization are connected to one another in accordance with a predetermined circuit diagram by means of electrically conductive connections through the substrate (17 - 22).

3. Doppler radar module according to Claim 1 or 2, characterized in that said module is designed for the frequency band from 1 to 5 GHz.

4. Doppler radar module according to one of Claims 1 to 3, characterized in that the length (29) of the radiating edges (18, 19) of the flat dipole (14) is less than their separation from one another, in that the difference between the length of the fourth substrate (15) and the distance between the two radiating edges (18, 19) of the flat dipole (14) is greater than 2 mm, and in that the thickness of the fourth substrate (15) is greater than 3 mm.

5. Doppler radar module according to one of Claims 2 to 4, characterized in that the fourth electrically insulating substrate (15) has third earth metallization (16) on the side opposite the flat dipole (14), and this third earth metallization (16) is electrically conductively connected to the second earth metallization (12).

6. Doppler radar module according to one of Claims 1 to 5, characterized in that the fourth electrically insulating substrate (15) has edge metallization (20).

7. Doppler radar module according to one of Claims 1 to 6, characterized in that the second substrate (9) has a number of DC input points (26, 27, 28) at the edge on the side on which the filter structures are fitted.

8. Doppler radar module according to one of Claims 1 to 7, characterized in that the surface acoustic wave filter arrangement (2) has:
an RF triplate filter (5) which is connected between the circuit (3) and the antenna (1), and
three AF triplate filters (6, 7, 8) which are each firstly connected to a DC input point (26, 27, 28), and are secondly connected to the circuit (3).

9. Doppler radar module according to one of Claims 2 to 8, characterized in that the second substrate (9) and the third substrate (10) each have edge metallization.

10. Doppler radar module according to one of Claims 1 to 8, characterized in that the multilayer board (13) has edge metallization (37).

11. Doppler radar module according to one of Claims 1 to 10, characterized in that the first substrate (4) has at least one earth web at the edge on the side on which the circuit (3) is fitted, and this earth web prevents lateral emission of the microwave radiation.

12. Doppler radar module according to one of Claims 1 to 11, characterized in that the second substrate (9) has a number of earth webs between the AF filter structures and the DC input points on the side on which the. filter structures are fitted, and these earth webs prevent lateral emission of the microwave radiation.

## Revendications

1. Module de radar Doppler construit selon la technique microbande et présentant une antenne (1), un circuit (3) d'émission et de réception de micro-ondes et un boîtier (36) réalisé en matériau électroconducteur, caractérisé
en ce que le circuit (3) d'émission et de réception de micro-ondes est placé au moins partiellement sur un premier substrat (4) électriquement isolant,
en ce qu'un agencement de filtres d'harmoniques (2) est construit sous forme de structure à trois plaquettes, dans laquelle une pluralité de structures filtrantes est disposée au moins partiellement sur un deuxième substrat (9) électriquement isolant, en ce que l'antenne (1) est une antenne en nappe, dans laquelle un dipôle plat (14) est placé sur un quatrième substrat (15) électriquement isolant,
en ce que le premier substrat (4) électriquement isolant et le deuxième substrat (9) électriquement isolant sont réunis dans une platine multicouche (13),
en ce que l'antenne (1) est fixée sur la platine multicouche (13), et
en ce que le circuit (3), l'agencement de filtres d'harmoniques (2) et le dipôle plat (14) sont reliés entre eux, au moyen de traversées de substrat (17-22) électroconductrices, selon un schéma de connexions prédéfini.

2. Module de radar Doppler selon la revendication 1, caractérisé
en ce que le circuit (3) d'émission et de réception de micro-ondes est placé sur le premier substrat (4) électriquement isolant,
en ce que l'agencement de filtres d'harmoniques (2) est construit sous forme de structure à trois plaquettes, dans laquelle une pluralité de structures filtrantes est disposée entre un deuxième (9) et un troisième (10) substrat électriquement isolant, lesquels présentent chacun sur une face opposée à la pluralité de structures filtrantes, une première (11) resp. une deuxième (12) métallisation de masse,
(3) d'émission et de réception de micro-ondes et l'agencement de filtres d'harmoniques (2) sont réunis dans une platine multicouche (13), de telle sorte que la première métallisation de masse (11) s'appuie contre la face du premier substrat électriquement isolant (4), qui est opposée au circuit (3) d'émission et de réception de micro-ondes,
en ce que l'antenne (1) est fixée de telle sorte sur la platine multicouche (13) que la face opposée au dipôle plat (14) du quatrième substrat électriquement isolant se trouve opposée à la deuxième métallisation de masse (12),
en ce que le circuit (3), l'agencement de filtres d'harmoniques (2), le dipôle plat (14) et la première (11) et la deuxième (12) métallisation de masse sont reliés entre eux, au moyen de traversées de substrat (17 - 22) électroconductrices, selon un plan de connexions prédéfini.

3. Module de radar Doppler selon la revendication 1 ou 2, caractérisé en ce qu'il est conçu pour la gamme des fréquences allant de 1 à 5 GHz.

4. Module de radar Doppler selon l'une des revendications 1 à 3, caractérisé en ce que la longueur (29) des bords rayonnants (18, 19) du dipôle plat (14) est inférieure à la distance qui les sépare, en ce que la différence entre la longueur du quatrième substrat (15) et la distance séparant les deux bords rayonnants (18, 19) du dipôle plat (14) est supérieure à 2 mm et en ce que l'épaisseur du quatrième substrat (15) est supérieure à 3 mm.

5. Module de radar Doppler selon l'une des revendications 2 à 4, caractérisé en ce que le quatrième substrat (15) électriquement isolant situé sur la face opposée au dipôle plat (14) présente une troisième métallisation de masse (16), laquelle est reliée à la deuxième métallisation de masse (12) de manière à conduire l'électricité.

6. Module de radar Doppler selon l'une des revendications 1 à 5, caractérisé en ce que le quatrième substrat (15) électriquement isolant présente une métallisation de bord (20).

7. Module de radar Doppler selon l'une des revendications 1 à 6, caractérisé en ce que le deuxième substrat (9) présente sur la face sur laquelle sont placées les structures filtrantes, du côté du bord, une pluralité de points d'alimentation DC (26, 27, 28).

8. Module de radar Doppler selon l'une des revendications 1 à 7, caractérisé en ce que l'agencement de filtres d'harmoniques (2) présente
un filtre HF à trois plaquettes (5), qui est raccordé entre le circuit (3) et l'antenne (1), et
trois filtres BF à trois plaquettes (6, 7, 8), qui sont raccordés chacun à un point d'alimentation DC (26, 27, 28) d'une part et reliés au circuit (3) d'autre part.

9. Module de radar Doppler selon l'une des revendications 2 à 8, caractérisé en ce que le deuxième substrat (9) et le troisième substrat (10) présentent respectivement une métallisation de bord.

10. Module de radar Doppler selon l'une des revendications 1 à 8, caractérisé en ce que la platine multicouche (13) présente une métallisation de bord (37).

11. Module de radar Doppler selon l'une des revendications 1 à 10, caractérisé en ce que le premier substrat (4) présente sur la face sur laquelle est placé le circuit (3), du côté du bord, au moins une barrette de masse qui empêche une émission latérale du rayonnement micro-ondes.

12. Module de radar Doppler selon l'une des revendications 1 à 11, caractérisé en ce que le deuxième substrat (9) présente sur la face sur laquelle sont placées les structures filtrantes, entre les structures filtrantes BF et les points d'alimentation DC, une pluralité de barrettes de masse, qui empêche une émission latérale du rayonnement micro-ondes.
